# EUROPÄISCHE PATENTSCHRIFT

(11) **EP 1 086 143 B1**
(45) Veröffentlichungstag und Bekanntmachung des Hinweises auf die Patenterteilung: **24.08.2005**
(21) Anmeldenummer: 99915632.6
(22) Anmeldetag: 17.03.1999
(51) Int. Cl.: C08F 2/00, B01J 19/24, C08F 2/06, B01J 19/00, C08F 20/12

(54) **VERFAHREN UND VORRICHTUNG ZUR KONTINUIERLICHEN HERSTELLUNG VON POLYMERISATEN**
METHOD AND DEVICE FOR CONTINUOUS PRODUCTION OF POLYMERS
PROCEDE ET DISPOSITIF POUR LA PRODUCTION EN CONTINU DE POLYMERES

(30) Priorität: 17.04.1998 DE 19816886
(43) Veröffentlichungstag der Anmeldung: 28.03.2001
(73) Patentinhaber: SIEMENS AKTIENGESELLSCHAFT, 80506 München (DE)
(72) Erfinder: PYSALL, Detlev, D-63303 Dreieich (DE); WACHSEN, Olaf, D-65929 Frankfurt am Main (DE); BAYER, Thomas, D-65812 Bad Soden (DE); WULF, Stefan, D-41066 Mönchengladbach (DE)
(86) Internationale Anmeldenummer: PCT/EP1999/001734
(87) Internationale Veröffentlichungsnummer: WO 1999/054362

(56) Entgegenhaltungen:
- EP-A- 0 749 987
- DE-A- 2 940 043

## Beschreibung

Die Erfindung betrifft ein Verfahren und eine Vorrichtung zur kontinuierlichen Herstellung von Polymerisaten, bei dem mindestens zwei Reaktionspartner (Edukte) durch einen Mikromischer hindurch und zusammengeführt sowie miteinander vermischt werden.

Bei den Reaktionspartnern handelt es sich beispielsweise um ein oder mehrere flüssige oder gelöste Monomere und einen oder mehrere Initiatoren.

Aus der DE-A 19 41 266 ist ein Verfahren zur Durchführung chemischer Reaktionen zwischen gasförmigen und/oder flüssigen Reaktionspartnern bekannt, bei dem mindestens zwei Reaktionspartner durch eine ihnen jeweils zugeordnete Schar von Mikrokanälen in räumlich getrennte Mikroströme aufgeteilt werden, die anschließend in einen gemeinsamen Misch- und Reaktionsraum austreten. Die Mikroströme treten in Gestalt von Fluidlamellen der Edukte aus den Mikrokanälen mit für das jeweilige Edukt gleichen Strömungsgeschwindigkeiten in den Misch-/Reaktionsraum aus. Jede Fluidlamelle eines Edukts ist unmittelbar benachbart zu einer Fluidlamelle eines anderen Edukts in den Misch- und Reaktionsraum geführt, wobei sich die benachbarten Fluidlamellen durch Diffusion und/oder Turbulenz miteinander vermischen.

Für die Durchmischung wird ein sogenannter Mikrostruktur-Lamellenmischer mit wenigstens einer Mischkammer und einem vorgeschalteten Führungsbauteil für die Zufuhr der zu mischenden Fluiden zu der Mischkammer verwendet. Das Führungsbauteil kann aus mehreren plattenartigen, übereinander geschichteten Elemente zusammengesetzt sein, die von schräg bzw. quer zur Längsachse des Mikromischers verlaufenden Kanälen durchzogen sind. Die Kanäle benachbarter Elemente kreuzen sich berührungslos und münden in die Mischkammer aus. Eine weitere Möglichkeit der Konstruktion eines Mikromischers besteht in einer parallelen Anordnung von Kanälen. Die zu mischenden Fluide strömen aus entgegengesetzten Richtungen in den Mischer ein und treten gemischt senkrecht dazu in die Mischkammer aus. Durch den Mischer werden die Reaktionspartner innig miteinander in Kontakt gebracht, d.h. gut miteinander vermischt. Wie aus dem genannten Dokument hervorgeht, hängt die Güte der Vermischung und der Einfluß des Mischorgans auf die Ausbeute an erwünschtem Produkt in großem Maße vom Verhältnis der durch die Reaktionskinetik gegebenen chemischen Reaktionsgeschwindigkeiten zur Mischgeschwindigkeit ab. Bei chemisch langsamen Reaktionen laufen diese in der Regel wesentlich langsamer als die Vermischung ab. Liegen die chemischen Reaktionsgeschwindigkeiten und die Vermischungsgeschwindigkeit in der gleichen Größenordnung, so treten komplexe Wechselwirkungen zwischen den Kinetiken der Reaktionen und dem lokalen, durch die Turbulenz bestimmten Vermischungsverhalten im verwendeten Reaktor und im Mischorgan, bei dem es sich im allgemeinen um einen Mikromischer handelt, auf. Sind die chemischen Reaktionsgeschwindigkeiten wesentlich schneller als die Mischgeschwindigkeit, so werden die Reaktionsgeschwindigkeiten und die Ausbeuten im wesentlichen durch die Vermischung, d.h. durch das lokale, zeitabhängige Geschwindigkeits- und Konzentrationsfeld der Reaktionspartner bestimmt.

Im Stand der Technik ist es üblich, zur Durchführung schneller Reaktionen eine Anzahl von Mischorganen bzw. Mischern einzusetzen. Dabei wird zwischen Dynamischen Mischern wie beispielsweise Rührern, Turbinen oder Rotor-StatorSystemen und statischen Mischern wie z.B. Kenics-Mischem, SMV-Mischern und Strahlmischern unterschieden.

Auf dem Gebiet der Lösungspolymerisation von Monomeren auf Acrylatbasis, mit oder ohne Zusätze, findet üblicherweise eine Batch- oder Semibatch-Technologie Anwendung, die aufgrund der diskontinuierlich hergestellten Polymere eine gleichbleibende Produktqualität nicht gewährleisten kann. Der Übergang von der bekannten Batch- bzw. Semibatch-Technologie zu einer kontinuierlichen Produktion von Lösungspolymeren bringt insofern Probleme mit sich, als derartige Polymere bei hohen Molekulargewichten unlöslich im Lösungsmittel werden können. Im Fall eines als Lösungspolymerisat definierten Polymeren handelt es sich um einen geringen hochmolekularen Anteil des Polymers an der Molmassenverteilung. Dieser hochmolekulare Anteil kann unter anderem durch eine anfänglich schlechte Durchmischung von Monomeren und Initiator entstehen, da ein örtlicher Unterschuß an Initiator zur Bildung von Makromolekülen mit sehr hohem Polymerisationsgrad führen kann, die bekannterweise im Fall der radikalischen Polymerisation innerhalb einer Zeit von kleiner als einer Sekunde entstehen. Diese hochmolekularen Anteile führen zu einer deutlichen Verbreiterung der Molmassenverteilung bis hin zu bimodalen Molmasseverteilungen. Als Folge hiervon entstehen unerwünschte Beläge im Reaktorsystem. Das Ausfallen der unlöslichen Moleküle aus der Lösung wird bekannterweise durch Festkörperoberflächen, wie Reaktorwände, Einbauten etc. begünstigt. In Rohrreaktoren, die oftmals zur Intensivierung der Mischvorgänge und des Wärmeübergangs mit statischen Mischern ausgestattet sind, liegt ein großes und damit ungünstiges Oberflächen-Volumen-Verhältnis vor. Hierdurch muß im Vergleich zu einem Batch-Rührkesselreaktor mit vergleichbarer Kapazität von einer größeren Wahrscheinlichkeit der Belagsbildung im Reaktorsystem ausgegangen werden, was im Fall des kontinuierlich betriebenen Rohrreaktors zu einer Verstopfung des Systems führen kann und einen Dauerbetrieb ausschließt. Die im allgemeinen geringen Polymermengen mit hohen Molmassen im Produktgemisch können ausreichen, um einen Rohrreaktor zuzusetzen, da der Prozeß über sehr lange Zeiten betrieben wird. Liegt im Fall des Rohrreaktors am Reaktoranfang bei der Dosierung eine schlechte Homogenisierung des Reaktionsgemisches über eine systemabhängige Mischstrecks vor kann es besonders in diesem Bereich zu einer intensiven Belagsoffdung kommen.

Bei den Monomeren auf Acrylatbasis kann es sich beispielsweise um Copolymere handeln, wie sie in der DE-A 40 27 594 beschrieben sind. Diese Copolymerisate basieren potentiell auf Alkyl- und funktionalisierten Alkylestem von α,β-ethylenisch ungesättigten Carbonsäuren und gegebenenfalls copolymerisierbaren Vinylmonomeren. Ein weiteres Monomeres ist beispielsweise Styrol.

Aus der EP 0 749 987 A1 ist ein Verfahren zur kontinuierlichen anionischen Polymerisation bekannt. Hierbei besteht das Monomersystem mindestens aus einem (Meth)acrylsäuremonomer. Der Initiator besteht aus Metallorganylen, wie sie zur anionischen Polymerisation verwendet werden. Da es sich bei derartigen Reaktionen um sehr schnelle Reaktionen handelt, die innerhalb von 0,2 bis 0,3 Sekunden zu vollständigem Umsatz führen, wurde für eine kontinuierliche Reaktionsführung ein adiabatischer Rohrreaktor mit vorgeschaltetem Mikromischer entwickelt. Bei dem Mikromischer handelt es sich um einen turbulent mischenden Tangentialstrommischer. Die Verweilzeit im Mischer beträgt ca. 0,05 Sekunden. Die Edukte (Monomere, Lösungsmittel und Initiator) werden vor Zuführung in den Mischer auf -14 bis -40°C herabgekühlt, um einen Reaktionsstart im Mischer zu vermeiden. Die Reaktion findet im Rohrreaktor statt. Durch die adiabatische Reaktionsführung wird je nach Monomer-Initiator-System eine Endtemperatur von 44°C bis 91 °C erreicht.

Ausgehend von dem voran beschriebenen Stand der Technik besteht die Aufgabe der Erfindung darin, ein Verfahren und eine Vorrichtung für eine kontinuierliche Produktion von radikalischen Lösungspolymerisaten bereit zu stellen, bei dem eine Verstopfung bzw. Belegung des Reaktorsystems weitgehend vermieden wird und die Vorrichtung über längere Zeiträume ohne Unterbrechung betrieben werden kann.

Diese Aufgabe wird erfindungsgemäß durch ein Verfahren der eingangs beschriebenen Art in der Weise gelöst, daß die Edukte vor dem Eintreten in den Mikromischer soweit vorgewärmt werden, daß sie eine erforderliche Reaktionstemperatur nach dem Eintritt in den Mikromischer erreichen, in welchem sie durch Diffusion und/oder Turbulenz in einer Weise vermischt werden, daß eine Bildung von bimodalen Molmassenverteilungen oder hochmolekularen Anteilen unterbleibt und daß eine Polymerisation der Monomeren-Reaktionspartner in einem dem Mikromischer nachgeschalteten Rohrreaktor stattfindet. Dazu ist es erforderlich, daß die Mischung sofort erfolgt, d.h. daß die Mischzeit kleiner als die Reaktionszeit zur Bildung einer einzelnen Polymerkette ist. Bevorzugte Mischzeiten liegen je nach Reaktionszeit im Bereich von einer Sekunde bis hin zur spontanen Vermischung. Typische Reaktionszeiten sind dem Fachmann geläufig und liegen je nach Reaktionstyp und Temperatur im Bereich von Millisekunden bis einigen Sekunden. Durch die Vorwärmung kann die erforderliche Reaktionstemperatur unmittelbar nach Eintritt in den Mikromischer erreicht werden.

Besondere Ausführungsformen des erfindungsgemäßen Verfahrens sind in den Unteransprüchen offenbart.

In Ausgestaltung des Verfahrens wird das eine Edukt aus Monomeren auf Acrylatbasis mit einem Styrolzusatz sowie einem Lösungsmittel durch einen ersten beheizten Wärmetauscher hindurchgeführt. Wahlweise durchströmt das eine Edukt aus Monomeren auf Acrylatbasis, jedoch ohne Styrol-Zusatz, und mit einem Lösungsmittel einen ersten beheizten Wärmeaustauscher.

Weiterhin wird das andere Edukt aus einem radikalischen Initiator und gegebenenfalls einem Lösungsmittel durch einen zweiten beheizten Wärmetauscher hindurchgeleitet.

In Ausführung des Verfahrens wird das Edukt aus Monomeren-Lösungsmittel und das Edukt aus Initiator-Lösungsmittel in einem Mischungsverhältnis von 1:1 bis 10:1, insbesondere von 9:1 in den Mikromischer eingespeist.

Die Vorrichtung zur kontinuierlichen Herstellung von Polymerisaten, mit Vorlagebehältern für die Reaktionspartner, Dosier- und Regeleinrichtungen, Filter und mit oder ohne Vormischer zeichnet sich dadurch aus, daß sowohl den Vorlagebehältern für das Edukt aus Monomeren und gegebenenfalls Lösungsmittel als auch den Vorlagebehältern für das Edukt aus Initiator und gegebenenfalls Lösungsmittel je ein beheizter Wärmetauscher nachgeschaltet ist, daß jeder der beiden Wärmetauscher über Leitungen mit dem Mikromischer verbunden ist und daß der Mikromischer an einen Rohrreaktor angeschlossen ist, der mit einem Austragsbehälter für die Lösungspolymeren in Verbindung steht.

Die weitere Ausgestaltung der erfindungsgemäßen Vorrichtung ergibt sich aus den Merkmalen der Patentansprüche 8 bis 15.

Das erfindungsgemäße Verfahren (incl. seiner Ausführungsformen) unterscheidet sich von dem bekannten Verfahren aus EP 0 749 987 A1 dadurch, daß das bekannte Verfahren anionische Polymerisationen betrifft, während das erfindungsgemäße Verfahren radikalische Polymerisationen betrifft. Somit werden unterschiedliche Initiatorsysteme verwendet. Das bekannte Verfahren basiert zudem auf einer adiabatischen Temperaturführung des Rohrreaktors. Das neue Verfahren kann eine kontrollierte Temperaturführung beeinhalten, mit definierten, einstellbaren Temperaturen, die für die Reaktionsführung der radikalischen Polymerisation günstig ist. Beim bekannten Verfahren werden die Edukte bei -13°C bis -40°C dem Mikromischer zugeführt. Die Aufheizung erfolgt durch die gebildete Reaktionswärme der anschließenden Polymerisation. Im neuen Verfahren werden die Eduktströme derart vorgeheizt, daß nach der Vermischung, bevorzugt unmittelbar nach dem Eintritt, im Mikromischer eine Anfangstemperatur von z.B. 120°C (je nach Reaktionstyp) vorliegt. Überschüssige Reaktionswärme, die zu einer Aufheizung des Reaktionsgemisches führen würde, kann mit üblichen Kühlungen vom System abgeführt werden. Durch die unterschiedlichen Anfangstemperaturen im bekannten und im neuen, erfindungsgemäßen Verfahren, findet im bekannten Verfahren die Reaktion ausschließlich in dem Rohrreaktor statt, den dem Mikromischer nachgeschaltet statt. Im neuen Verfahren kann die Reaktion bereits im Mikromischer stattfinden. Im bekannten Verfahren wird der Mikromischer durch einen ausschließlich turbulent mischenden Tangentialstrommischer beschrieben. Im neuen Verfahren werden bevorzugt Mikromischer mit einer Lamellenstruktur verwendet, die durch Diffusion und/oder Turbulenz mischen.

Bei der Erfindung wird, um eine Verbesserung der Vermischung zu erreichen, ein Mikromischer eingesetzt. In diesem werden die zwei zu vermischenden Eduktströme über sehr feine lamellenartige Kanäle derart zusammengeführt, daß bereits beim Aufeinandertreffen der Ströme eine Vermischung der Edukte im Mikro-Bereich vorliegt. Konstruktionsbedingt sind in einem derartigen Mikromischer extrem kleine Kanäle vorhanden, die zu einem extrem hohen Oberflächen-Volumen-Verhältnis führen, wodurch die Wahrscheinlichkeit der Belagsbildung im Mischsystem und daraus folgend die Wahrscheinlichkeit der Verstopfung des Mischers stark ansteigen sollte. Überraschenderweise kann jedoch durch die sehr gute Vermischung der Edukte die Bildung eines hochmolekularen Anteils vermieden werden, so daß keine unlöslichen hochmolekularen Anteile in der Molmassenverteilung gebildet werden und trotz des extrem großen Oberflächen-Volumen-Verhältnisses keine Belagsbildung im Reaktorsystem auftritt.

Die Erfindung wird im folgenden anhand der Zeichnungen näher erläutert. Es zeigen:
- Fig. 1: ein Fließschema für eine Vorrichtung zur Durchführung chemischer Reaktionen nach der Erfindung,
- Fig. 2: eine Draufsicht auf einen in der erfindungsgemäßen Vorrichtung eingesetzten Mikromischer als Beispiel,
- Fig. 3: eine Draufsicht auf eine Mischeinheit des Mikromischers mit einer Anzahl von Kanälen auf jeder Zuführungsseite, und
- Fig. 4a und 4b: die Molmassenverteilung von Lösungspolymeren, die ohne Einsatz bzw. mit Einsatz eines Mikromischers hergestellt wurden

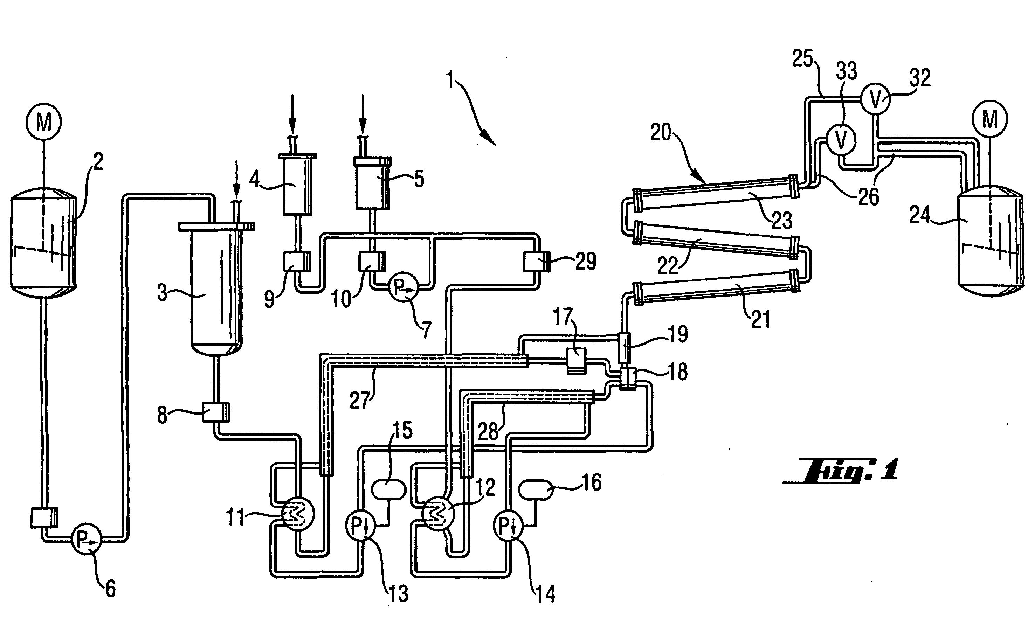

Fig. 1 zeigt das Fließschema einer Vorrichtung 1 bzw. einer Anlage zur Herstellung von Lösungspolymeren. Ausgangsstoffe sind ein Monomeren-Lösungsmittel-Gemisch, das in Vorlagebehälter 2 und 3 bevorratet ist und ein Initiator-Lösungsmittel-Gemisch, das in Vorlagebehältern 4 und 5 enthalten ist. Der Vorlagebehälter 2 enthält einen Rührmischer, dessen Rührer von einem Motor M in Drehung versetzt wird. über eine Dosier- und Regeleinrichtung 6 ist der Vorlagebehälter 2 mit dem Vorlagebehälter 3 verbunden, der ebenso wie der Vorlagebehälter 4 in nichtgezeigter Weise beispielsweise mit Stickstoff beaufschlagt werden kann. Das Monomeren-Lösungsmittel-Gemisch strömt von dem Vorlagebehälter 3 über eine Leitung, in der ein Filter 8 eingebaut ist, das eventuelle Verunreinigungen aus dem Gemisch herausfiltert, in einen beheizten Wärmetauscher 11 und von diesen über eine beheizte Leitung 27 und einen Filter 17 in einen Mikromischer 18. Bei dem Mikromischer 18 handelt es sich um auf dem Markt erhältliche Mikromischer unterschiedlicher Ausführungsformen.

Von dem Vorlagebehälter 4 wird das Initiator-Lösungsmittel-Gemisch über Filter 9 und 29 durch einen beheizten Wärmetauscher 12 hindurchgeleitet. Der weitere Vorlagebehälter 5 für das Initiator-Lösungsmittel-Gemisch ist über einen Filter 10, eine Dosier- und Regeleinrichtung 7 mit der Leitung verbunden, in der die Filter 9 und 29 angeordnet sind. Der Wärmetauscher 12 ist über eine beheizte Leitung 28 gleichfalls mit dem Mikromischer 18 verbunden. Für das Heizmedium zum Beheizen der Leitung 27 ist ein geschlossener Kreislauf vorgesehen, in dem am Ausgang der Leitung 27 das Heizmedium abgenommen und über einen Vormischer 19, den Mikromischer 18 und eine Dosier- und Regeleinrichtung 13 an den Anfang der Leitung 27 zurückgeführt wird. Eine Heizeinrichtung 15 erwärmt dabei das durch den geschlossenen Kreislauf hindurchströmende Heizmedium. In ähnlicher Weise erfolgt die Beheizung der Leitung 28, in dem am Ende der Leitung 28 das Heizmedium über eine Dosier- und Regeleinrichtung 14 an den Anfang der Leitung 28 zurückgeführt wird. Das Heizmedium in diesem geschlossenen Kreislauf wird durch eine Heizeinrichtung 16 erwärmt. Die Wärmetauscher 11, 12 sind auf eine Temperatur von unterhalb der Reaktionstemperatur bis auf Reaktionstemperatur vorgewärmt. Beispielsweise liegt diese Temperatur im Bereich von 50 bis 180°C.

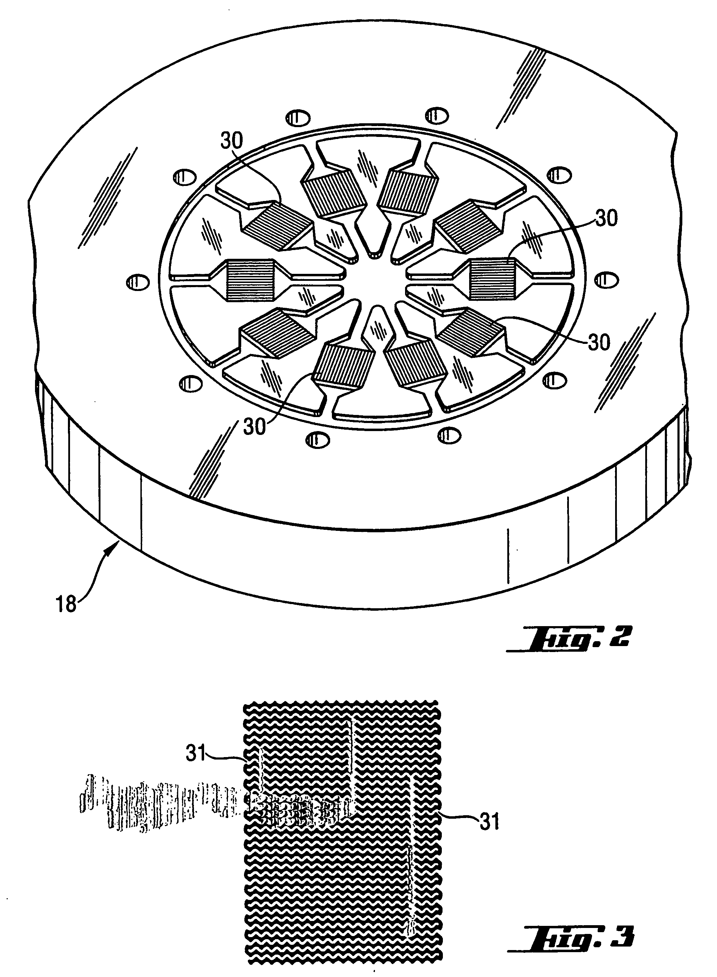

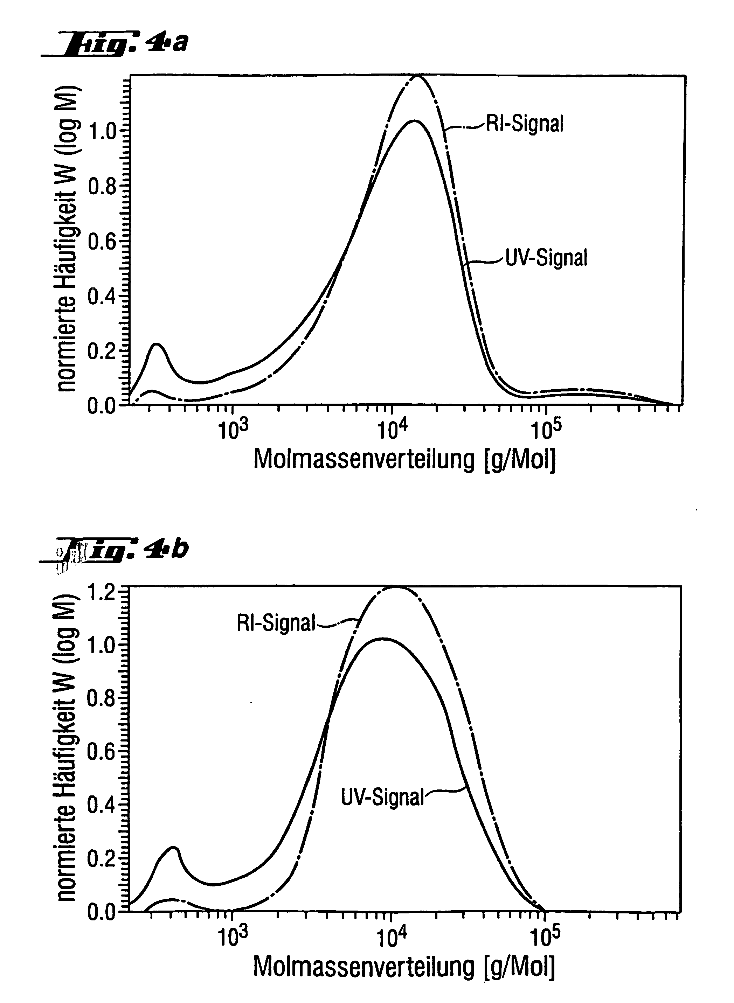

Dem Mikromischer 18, der noch anhand von den Fig. 2 und 3 näher beschrieben werden wird, ist der Vormischer 19 nachgeschaltet, jedoch kann der Vormischer gegebenenfalls auch entfallen. Daran schließt ein Rohrreaktor 20 an, der z.B. aus drei getrennt beheizbaren Rohren 21, 22 und 23 besteht, von denen beispielsweise jedes eine Länge von 1 m hat. Die beheizten Rohre 21, 22, 23 sind vollständig mit Mischern bestückt, wobei in den Rohren 21 und 22 sich beispielsweise Kenics-Mischer und im Rohr 23 Sulzer SMX-Mischer befinden. Die Rohre 21, 22, 23 sind bevorzugt mit statischen Mischern ausgerüstet, jedoch ist es ebenso möglich die Rohre ohne Mischer arbeiten zu lassen. Die Rohre 21 und 22 haben beispielsweise einen Nenndurchmesser von 10 mm, während das Rohr 23 einen Nenndurchmesser von 20 mm besitzt. Die Nenndurchmesser der Rohre des Rohrreaktors 20 sind frei wählbar und bestimmen sich nach dem gewünschten Durchsatz an Lösungspolymeren. Als Vormischer 19 ist beispielsweise gleichfalls ein Sulzer SMX-Mischer vorgesehen, der einen Nenndurchmesser von 5 mm haben kann. Bei den angegebenen Rohrdurchmessern beträgt das Gesamtvolumen der drei Rohre 21, 22, und 23 des Rohrreaktors 20 etwa 0,5 l.

Anstelle des Rohrreaktors 20 besteht auch die Möglichkeit, daß in der Nachreaktionsstrecke andere Reaktoren verwendet werden, die beispielsweise beheizte Mischer enthalten.

Das Monomeren-Lösungsmittel-Gemisch und das Initiator-Lösungsmittel-Gemisch werden in einem definierten Mischungsverhältnis von 1:1 bis 10:1, insbesondere von 9:1 in den Mikromischer eingespeist. Diese beiden Reaktionspartner, auch als Edukte bezeichnet, werden durch den Mikromischer hindurchgeführt und in einem Misch- und Reaktionsraum des Mikromischers zusammengeführt. Durch die vorgeschalteten temperierten Wärmetauscher 11 und 12 werden die beiden Edukte soweit erwärmt, daß beim Mischvorgang im Mikromischer 18 sofort die erforderliche Reaktionstemperatur von beispielsweise 60° bis 180°C erreicht wird. Die Reaktionstemperatur hängt von den jeweiligen Reaktionspartnern ab und ist nicht auf den voranstehenden Bereich beschränkt. Die Polymerisation der beiden Reaktionspartner erfolgt im nachgeschalteten Rohrreaktor 20. Die Einstellung der Molmassen, des Umsatzes und der Viskosität bei einem vorgegebenen MonomerGemisch erfolgt über den jeweiligen Initiator bzw. dessen Konzentration sowie über die Temperierung der Rohrreaktorstrecke und der Verweilzeit der Reaktionspartner im Rohrreaktor 20.
Der eine Reaktionspartner ist beispielsweise ein Edukt aus Monomeren auf Acrylatbasis, mit oder ohne Styrol-Zusatz, sowie einem Lösungsmittel. Der andere Reaktionspartner besteht aus einem oder mehreren radikalischen Initiatoren und einem Lösungsmittel.

Der Rohrreaktor 20 ist über Austragsleitungen 25 und 26 mit einem Austragsbehälter 24 für die Lösungspolymeren verbunden. In den Austragsleitungen 25, 26 ist je ein Regelventil 32, 33 angeordnet, mittels dem der Betriebsdruck in dem Rohrreaktor 20 steuerbar ist. Mit Hilfe der Regelventile 32, 33 wird der Betriebsdruck in der Reaktorstrecke nach dem Rohrreaktor 20 beispielsweise im Bereich von 2 x 10⁵ Pa bis 5 x 10⁶ Pa geregelt, um ein Sieden des Reaktionsgemisches im Rohrreaktor zu vermeiden. Die Austragsleitungen 25 und 26 sind gekühlt. Der Austragsbehälter 24 ist ein Rührbehälter, dessen Rührer von einem Motor M in Drehung versetzt wird.

In Fig. 2 ist eine perspektivische Draufsicht auf einen Mikromischer 18 gezeigt, bei dem es sich um einen an sich bekannten statischen Mikromischer handelt. Der Mikromischer 18 umfaßt eine Mikromischeranordnung mit einer Anzahl von Mischeinheiten 30, die sternförmig angeordnet sind. Die Anzahl von Kanälen 31, vgl. Fig. 3, pro Mischeinheit beträgt 2 x 16 bis 2 x 18. In dem Mikromischer 18 werden die miteinander zu vermischenden Reaktionspartner bzw. Edukte über die lamellenartigen Kanäle 31 in einer Weise zusammengeführt, daß beim Auftreten der Reaktionsströme eine Vermischung der Edukte im Mikrobereich geschieht. Obwohl die Kanäle in dem Mikromischer 18 ein extrem hohes Oberflächen-Volumen-Verhältnis aufweisen, das üblicherweise die Wahrscheinlichkeit der Belagsbildung im Mischersystem und daraus folgend die Wahrscheinlichkeit der Verstopfung des Mikromischers 18 stark erhöht, wird durch die sehr gute Vermischung der Edukte die Bildung eines hochmolekularen Anteils in der Molmassenverteilung weitgehend vermieden. Es tritt somit trotz des extrem großen Oberflächen-Volumen-Verhältnisses keine Belagsbildung auf. Dies wird anhand der Fig. 4a und 4b noch im einzelnen erläutert.
Selbstverständlich kann auch ein Mikromischer anderer Konfiguration, der handelsüblich ist, verwendet werden.

In den beiden Figuren 4a und 4b sind die mittels Gelpermeationschromatographie aufgenommen Molmassenverteilungen dargestellt, von denen Proben nach dem Rohrreaktor 20 bzw. aus dem Austragsbehälter 24 entnommen wurden. Die Kurven geben die normierte Häufigkeit W(log M) über den Molmassen der Lösungspolymeren wieder. Das Lösungsmittel für die Monomeren bzw. den Initiator war jeweils Tetrahydrofuran, wobei die Polymerkonzentration zwischen 5.61 bis 5.64 g/l im Lösungsmittel betrug. Die UV-Signalkurve ist mit durchgezeichneter Linie dargestellt, während die RI-Signalkurve strichpunktiert ist, wobei RI der Refraktometerindex bzw. der Brechungsindex ist.

In Fig. 4a, die Lösungspolymere betrifft, die ohne Einsatz des Mikromischers 18 hergestellt wurden, ist deutlich zu erkennen, daß bei einer Molmasse > 10⁵ g/Mol ein hochmolekularer Anteil vorhanden ist. Ein Vergleich mit den Lösungspolymeren nach Fig. 4b, die unter Verwendung des Mikromischers 18 hergestellt wurden, zeigt, daß ein hochmolekularer Anteil mit einer Molmasse > 10⁵ g/Mol in den Lösungspolymeren nicht vorhanden ist, so daß es im Mikromischer trotz des hohen Oberflächen-Volumen-Verhältnisses, ebenso im nachgeschalteten Rohrreaktor 20, praktisch zu keiner Belagsbildung kommt.

Die Reaktion wird im allgemeinen so geführt, daß sich bei den Polymerisaten Verteilungsbreiten Mₙ/M_{w} entsprechend einer ideal durchmischten radikalischen Polymerisation einstellen, mit dem Zahlenmittel Mₙ und dem Gewichtsmittel M_{w} der Molmassenverteilung.

## Patentansprüche

1. Verfahren zur kontinuierlichen Herstellung von Polymerisaten durch radikalische Polymerisation, bei dem mindestens zwei Reaktionspartner (Edukte) durch einen Mikromischer hindurch - und zusammengeführt sowie miteinander vermischt werden, **dadurch gekennzeichnet, daß** die Edukte vor dem Eintritt in den Mikromischer (18) soweit vorgewärmt werden, daß sie eine erforderliche Reaktionstemperatur nach dem Eintritt in den Mikromischer (18) erreichen, in welchem sie durch Diffusion und/oder Turbulenz miteinander in einer Weise vermischt werden, daß eine Bildung von bimodalen Molmassenverteilungen oder hochmolekularen Anteilen unterbleibt und daß eine Polymerisation der Monomeren-Reaktionspartner in einem dem Mikromischer nachgeschalteten Rohrreaktor (20) stattfindet.

2. Verfahren nach Anspruch 1, **dadurch gekennzeichnet, daß** die Reaktion so geführt wird, daß sich bei den Polymerisaten Verteilungsbreiten Mₙ/M_{w} entsprechend einer ideal durchmischten radikalischen Polymerisation einstellen, mit dem Zahlenmittel Mₙ und dem Gewichtsmittel M_{w} der Molmassenverteilung

3. Verfahren nach Anspruch 1, **dadurch gekennzeichnet, daß** das eine Edukt aus Monomeren auf Acrylatbasis mit einem Styrolzusatz sowie einem Lösungsmittel durch einen ersten beheizten Wärmetauscher (11) hindurchgeführt wird.

4. Verfahren nach Anspruch 1, **dadurch gekennzeichnet, daß** das eine Edukt aus Monomeren auf Acrylatbasis, ohne Styrolzusatz, und mit einem Lösungsmittel einen ersten beheizten Wärmetauscher (11) durchströmt.

5. Verfahren nach Anspruch 1, **dadurch gekennzeichnet, daß** das andere Edukt aus einem radikalischen Initiator und einem Lösungsmittel durch einen zweiten beheizten Wärmetauscher (12) hindurchgeleitet wird.

6. Verfahren nach Anspruch 1, **dadurch gekennzeichnet, daß** das Edukt aus Monomeren-Lösungsmittel und das Edukt aus Initiator-Lösungsmittel in einem Mischungsverhältnis von 1:1 bis 10:1, insbesondere von 9:1, in den Mikromischer eingespeist wird.

7. Vorrichtung zur kontinuierlichen Herstellung von Polymerisaten gemäß einem Verfahren nach einem oder mehreren der Ansprüche 1 bis 6, mit Vorlagebehältern (2, 3; 4, 5) für die Reaktionspartner, Dosier- und Regeleinrichtungen (6, 7), Filter (8-10, 17, 29), und mit oder ohne Vormischer (19), **dadurch gekennzeichnet, daß** sowohl den Vorlagebehältern (2, 3) für das Edukt aus Monomeren-Lösungsmittel als auch den Vorlagebehältern (4, 5) für das Edukt aus Initiator-Lösungsmittel je ein beheizter Wärmetauscher (11; 12) nachgeschaltet ist, daß jeder der beiden Wärmetauscher über Leitungen (27, 28) mit dem Mikromischer (18) verbunden ist und daß der Mikromischer (18) an einen Rohrreaktor (20) angeschlossen ist, der mit einem Austragsbehälter (24) für die Lösungspolymeren in Verbindung steht.

8. Vorrichtung nach Anspruch 7, **dadurch gekennzeichnet, daß** der Mikromischer (18) über einen Vormischer (19) an den Rohrreaktor (20) angeschlossen ist.

9. Vorrichtung nach Anspruch 7, **dadurch gekennzeichnet, daß** die Wärmetauscher (11; 12) auf eine Temperatur von unterhalb der Reaktionstemperatur bis auf Reaktionstemperatur vorgewärmt sind.

10. Vorrichtung nach Anspruch 7, **dadurch gekennzeichnet, daß** der Mikromischer (18) aus einer Mikromischer-Anordnung mit einer Anzahl von Mischeinheiten (30) besteht, die sternförmig angeordnet sind und daß die Anzahl der Kanäle (31) pro Mischeinheit 2 x 16 bis 2 x 18 beträgt.

11. Vorrichtung nach Anspruch 7, **dadurch gekennzeichnet, daß** der Austrag aus dem Rohrreaktor (20) in den Austragsbehälter (24) über gekühlte Austragsleitungen (25, 26) erfolgt.

12. Vorrichtung nach Anspruch 11, **dadurch gekennzeichnet, daß** der Austragsbehälter (24) ein Rührbehälter ist, dessen Rührer über einen Motor (M) drehbar ist.

13. Vorrichtung nach Anspruch 7, **dadurch gekennzeichnet, daß** der Rohrreaktor (20) aus mehreren Rohren (21, 22, 23) besteht, die getrennt beheizbar und in Reihe geschaltet sind.

14. Vorrichtung nach Anspruch 13, **dadurch gekennzeichnet, daß** jedes der Rohre mit Mischern bestückt ist.

15. Vorrichtung nach Anspruch 11, **dadurch gekennzeichnet, daß** in den Austragsleitungen (25, 26) je ein Regelventil (32, 33) angeordnet ist, mittels dem der Betriebsdruck in dem Rohrreaktor (20) derart steuerbar ist, daß ein Sieden des Reaktionsgemisches im Rohrreaktor vermieden wird.

## Claims

1. Process for the continuous preparation of polymers by free-radical polymerization in which at least two reaction partners (starting materials) are conducted through a micromixer and combined and mixed with one another, which comprises the starting materials, prior to their entry into the micromixer (18), being preheated to the extent that they reach a required reaction temperature after entry into the micromixer (18), in which they are mixed with one another by diffusion and/or turbulence in such a manner that formation of bimodal molar mass distributions or high-molecular-weight fractions is suppressed and that a polymerization of the monomeric reaction partners takes place in a tube reactor (20) downstream of the micromixer.

2. Process according to Claim 1, **characterized in that** the reaction is carried out in such a manner that, in the polymers, distribution widths Mₙ/M_{w} according to an ideally mixed free-radical polymerization are established, having the number average Mₙ and the weight average M_{w} of the molar mass distribution.

3. Process according to Claim 1, **characterized in that** the one starting material of acrylate-based monomers having a styrene addition and a solvent is passed through a first heated heat exchanger (11).

4. Process according to Claim 1, **characterized in that** the one starting material of acrylate-based monomers without styrene addition and with a solvent flows through a first heated heat exchanger (11).

5. Process according to Claim 1, **characterized in that** the other starting material of a free-radical initiator and a solvent is passed through a second heated heat exchanger (12).

6. Process according to Claim 1, **characterized in that** the starting material of monomers/solvent and the starting material of initiator/solvent is fed into the micromixer in a mixing ratio of from 1:1 to 10:1, in particular 9:1.

7. Apparatus for the continuous preparation of polymers according to a process according to one or more of Claims 1 to 6, having reservoirs (2, 3; 4, 5) for the reaction partners, metering and control devices (6, 7), filters (8-10, 17, 29), and with or without premixer (19), wherein a heated heat exchanger (11; 12) is connected in each case downstream of both the reservoirs (2, 3) for the starting material of monomer/solvent and the reservoirs (4, 5) for the starting material of initiator/solvent, wherein each of the two heat exchangers is connected via lines (27, 28) to the micromixer (18) and wherein the micromixer (18) is connected to a tube reactor (20) which is connected to a discharge vessel (24) for the solution polymers.

8. Apparatus according to Claim 7, **characterized in that** the micromixer (18) is connected to the tube reactor (20) via a premixer (19).

9. Apparatus according to Claim 7, **characterized in that** the heat exchangers (11; 12) are preheated to a temperature from below the reaction temperature to the reaction temperature.

10. Apparatus according to Claim 7, **characterized in that** the micromixer (18) consists of a micromixer arrangement having a number of mixing units (30) which are arranged in a star shape and wherein the number of the channels (31) per mixing unit is from 2 x 16 to 2 x 18.

11. Apparatus according to Claim 7, **characterized in that** the tube reactor (20) discharges into the discharge vessel (24) via cooled discharge lines (25, 26).

12. Apparatus according to Claim 11, **characterized in that** the discharge vessel (24) is a stirred tank whose agitator can be rotated via a motor (M).

13. Apparatus according to Claim 7, **characterized in that** the tube reactor (20) consists of a plurality of tubes (21, 22, 23) which can be heated separately and are connected in series.

14. Apparatus according to Claim 13, **characterized in that** each of the tubes is packed with mixers.

15. Apparatus according to Claim 11, **characterized in that**, in each of the discharge lines (25, 26) is arranged a control valve (32, 33) by means of which the operating pressure in the tube reactor (20) can be controlled in such a manner that boiling of the reaction mixture in the tube reactor is avoided.

## Revendications

1. Procédé de production en continu de polymères par polymérisation radicalaire, dans lequel on fait passer ensemble dans un micromélangeur au moins deux partenaires de réaction (éduits) et on les mélange ensemble, **caractérisé en ce que** l'on préchauffe les éduits avant l'entrée dans le micromélangeur (18) jusqu'à ce qu'ils atteignent une température de réaction nécessaire après l'entrée dans le micromélangeur (18), dans lequel ils sont mélangés entre eux par diffusion et/ou par turbulence de façon à supprimer la formation de répartitions bimodales de masses moléculaires ou de proportions de grandes masses moléculaires et une polymérisation des partenaires de réaction monomères a lieu dans un réacteur (20) tubulaire monté en aval du micromélangeur.

2. Procédé suivant la revendication 1, **caractérisé en ce que** l'on conduit la réaction de façon à établir pour les polymères des largeurs de répartition Mₙ/M_{w} correspondant à une polymérisation radicalaire à mélange idéal, Mₙ étant la moyenne en nombre et M_{w} la moyenne en poids de la répartition des masses moléculaires.

3. Procédé suivant la revendication 1, **caractérisé en ce que** l'on fait passer un éduit constitué de monomères à base d'acrylate avec une addition de styrène ainsi qu'un solvant dans un premier échangeur de chaleur (11) chauffé.

4. Procédé suivant la revendication 1, **caractérisé en ce que** le premier éduit constitué de monomères à base d'acrylate sans addition de styrène et avec un solvant passe dans un premier échangeur de chaleur (11) chauffé.

5. Procédé suivant la revendication 1, **caractérisé en ce que** l'on fait passer l'autre éduit constitué de l'initiateur radicalaire et d'un solvant dans un deuxième échangeur de chaleur (12) chauffé.

6. Procédé suivant la revendication 1, **caractérisé en ce que** l'on envoie l'éduit constitué de monomères et du solvant et l'éduit constitué de l'initiateur et du solvant en un rapport de mélange de 1:2 à 10:1, notamment de 9:1 dans le micromélangeur.

7. Installation de production en continu de polymères suivant un procédé suivant l'une ou plusieurs des revendications 1 à 6, comprenant des réservoirs (2, 3, 4, 5) pour les partenaires de réaction, des dispositifs (6, 7) d'addition dosée de régulation, des filtres (8 à 10, 17, 29) et avec ou sans prémélangeur (19), **caractérisée en ce qu'**il est monté en aval tant des réservoirs (2, 3) pour l'éduit constitué de monomères et du solvant que des réservoirs (4, 5) pour l'éduit constitué de l'initiateur et du solvant, respectivement, un échangeur de chaleur (11, 12) chauffé, **en ce que** chacun des deux échangeurs de chaleur communique par des conduits (27, 28) avec le micromélangeur (18) et **en ce que** le micromélangeur (18) est raccordé à un réacteur (20) tubulaire qui communique avec une cuve (24) de déchargement des polymères en solution.

8. Installation suivant la revendication 7, **caractérisée en ce que** le micromélangeur (18) est raccordé au réacteur (20) tubulaire par un prémélangeur (19).

9. Installation suivant la revendication 7, **caractérisée en ce que** les échangeurs de chaleur (11, 12) sont préchauffés jusqu'à une température allant d'une température inférieure à la température de réaction à la température de réaction.

10. Installation suivant la revendication 7, **caractérisée en ce que** le micromélangeur est constitué d'un dispositif à micromélangeur ayant un certain nombre d'unités (30) de mélange qui sont disposées en étoile et **en ce que** le nombre des canaux (31) par unité de mélange est compris entre 2 x 16 et 2 x 18.

11. Installation suivant la revendication 7, **caractérisé en ce que** le déchargement du réacteur (20) tubulaire dans la cuve (24) de déchargement s'effectue par des conduits (25, 26) de déchargement qui sont refroidis.

12. Installation suivant la revendication 11, **caractérisée en ce que** la cuve (24) de déchargement est une cuve à agitation dont l'agitateur peut être entraîné en rotation par un moteur (M).

13. Installation suivant la revendication 7, **caractérisée en ce que** le réacteur (20) tubulaire est constitué de plusieurs tubes (21, 22, 23) qui peuvent être chauffés séparément et qui sont montés en série.

14. Installation suivant la revendication 13, **caractérisée en ce que** chacun des tubes est équipé de mélangeur.

15. Installation suivant la revendication 11, **caractérisée en ce qu'**il est monté dans les conduits (25, 26) de déchargement, respectivement, une vanne (32, 33) de régulation au moyen de laquelle la pression de fonctionnement dans le réacteur (20) tubulaire peut être réglée de façon à empêcher une ébullition du mélange de réaction dans le réacteur tubulaire.
